## Europäisches Patentamt

(19) **European Patent Office**

**Office européen des brevets**

(11) Veröffentlichungsnummer: **0 214 100**

**A1**

(12) # EUROPÄISCHE PATENTANMELDUNG

(21) Anmeldenummer: **86810385.4**

(51) Int. Cl.⁴: **G 01 B 13/12**

(22) Anmeldetag: **28.08.86**

(30) Priorität: **02.09.85 CH 3791/85**

(43) Veröffentlichungstag der Anmeldung:
**11.03.87 Patentblatt 87/11**

(84) Benannte Vertragsstaaten:
**AT BE CH DE FR GB IT LI SE**

(71) Anmelder: **ALCAN RORSCHACH AG**
**Industriestrasse 35**
**CH-9400 Rorschach(CH)**

(72) Erfinder: **Müller, Engelbert**
**Schlossbach 9**
**CH-9400 Rorschacherberg(CH)**

(74) Vertreter: **Gachnang, Hans Rudolf**
**Algisserstrasse 33**
**CH-8500 Frauenfeld(CH)**

(54) Verfahren zum berührungslosen Messen eines Abstandes, Abstandsmesselement, Verfahren zum kontinuierlichen Messen der Planheit von Folien, Element zum Messen der Planheit von Folien sowie Verfahren zum messen der Dicke eines starren Körpers.

(57) Zum Messen der Planheit einer Folie (37) wird diese durch einen Luftstrahl ausgelenkt und dann die Auslenkung (x) gemessen.

Das Abstandmessgerät (1) weist einen in einer Bohrung (5) verschiebbaren Düsenkörper (11) auf, durch den Luft gegen die Folie (37) geblasen wird. Da der Düsenkörper (11) stets in einem konstanten Abstand zur Folie (37) gehalten wird, kann die Auslenkung (x) (Abweichung von einer planen Folie) innerhalb des Abstandsmessgerätes (1), nämlich die Verschiebung (Δe) des Düsenkörpers (11) gemessen werden.

FIG. 1

EP 0 214 100 A1

**0214100**

ALCAN RORSCHACH AG, 9400 Rorschach, Schweiz     G610ep

- 1 -

Verfahren zum berührungslosen Messen eines Abstandes, Abstandsmesselement, Verfahren zum kontinuierlichen Messen der Planheit von Folien, Element zum Messen der Planheit von Folien sowie Verfahren zum Messen der Dicke eines starren Körpers

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

Gegenstand der Erfindung ist ein Verfahren zum berührungslosen Messen eines Abstandes gemäss Patentanspruch 1.

Gegenstand der Erfindung ist weiter ein Abstandsmessgerät gemäss Patentanspruch 4.

Gegenstand der Erfindung ist weiter ein Verfahren zum kontinuierlichen Messen der Planheit von Folien gemäss Patentanspruch 5.

Gegenstand der Erfindung ist auch ein Element zum Messen der Planheit von Folien gemäss Patentanspruch 10.

Gegenstand der Erfindung ist weiter ein Verfahren zum Messen der Dicke von starren Körpern gemäss Patentanspruch 15.

Die Herstellung von Metallfolien beginnt mit dem Abwalzen von barrenförmigem Ausgangsmaterial, dessen Temperatur einige hundert Grad Celsius betragen kann. Das Messen der Dicke eines solchen Barrens ist mit herkömmlichen Messvorrichtungen umständlich und muss sehr schenll erfolgen, um eine vorzeitige Abkühlung zu vermeiden. Sowohl bei einer aus dem Barren gewalzten Metallfolie, wie auch bei einer extrudierten oder geblasenenKunststoffolie besteht stets die Gefahr, dass die Folie nicht völlig plan anfällt und entweder zu lange oder zu kurze Ränder aufweist, d.h. dass die Folie an den Rändern länger ist als in der Mitte oder umgekehrt, dass die Folie entlang den Rändern gemessen kürzer ist als in der Mitte. Diese Planheitsabweichungen können zu Verarbeitungsunterbrüchen und Ausschuss führen.

Es sind Vorrichtungen bekannt, mit denen die Dicke der Barren und die Planheit von Folien, d.h. Abweichungen (bzw. Distanz von der Ebene) auf mechanischem Wege abgetastet werden können. Bei Folien mit einer Dicke im Bereich von etwa 10-100 $\mu$m, z.B. Aluminium- und Kunststoffolien, können die bekannten Vorrichtungen nicht mit Erfolg eingesetzt werden.

Die Aufgabe der Erfindung besteht nun darin, die Nachteile der bekannten Vorrichtungen zu beheben und eine Vorrichtung zu schaffen, mit der die Dicke von starren Körpern und die Planheit von auslenkbaren Körpern, z.B. Folienbahnen, berührungslos gemessen werden können.

Diese Aufgaben werden nach der Erfindung mit Verfahren gemäss
den kennzeichnenden Merkmalen der Patentansprüche 1, 5 und 15,
einem Abstandsmessgerät gemäss den kennzeichnenden Merkmalen
des Patentanspruches 4 und einem Element zum Messen der Planheit gemäss Patentanspruch 10 gelöst.

Es ist nun möglich, die Dicke von Werkstücken, welche Temperaturen von einigen hundert Grad Celsius aufweisen, berührungslos
sehr genau zu bestimmen. Die Dicke kann sowohl an einem stillstehenden als auch an einem bewegten Körper gemessen werden.

Es ist auch möglich, an dünnen Folienbahnen während deren Herstellung innerhalb der Produktionsanlage dauernd deren Planheit zu messen und die Messresultate als Signale für die Korrektur zu verwenden. Die Messung kann im wesentlichen an jeder
Stelle innerhalb der Anlage stattfinden, da für das Erfassen
des Abstandes der Folienbahn von der Sollage berührungsfrei
und ohne eine Referenzfläche auf der dem Messelement gegenüberliegenden Seite der Folienbahn erfolgen kann.

Weitere vorteilhafte Weiterbildungen der Erfindung sind in
den abhängigen Ansprüchen beschrieben.

Anhand dreier illustrierter Ausführungsbeispiele wird die Erfindung näher erläutert. Es zeigen:

Figur 1     einen Querschnitt durch ein Abstandsmesselement
            mit einer ringförmigen Spaltdüse,

Figur 2     einen Grundriss des Abstandsmesselementes nach
            Figur 1,

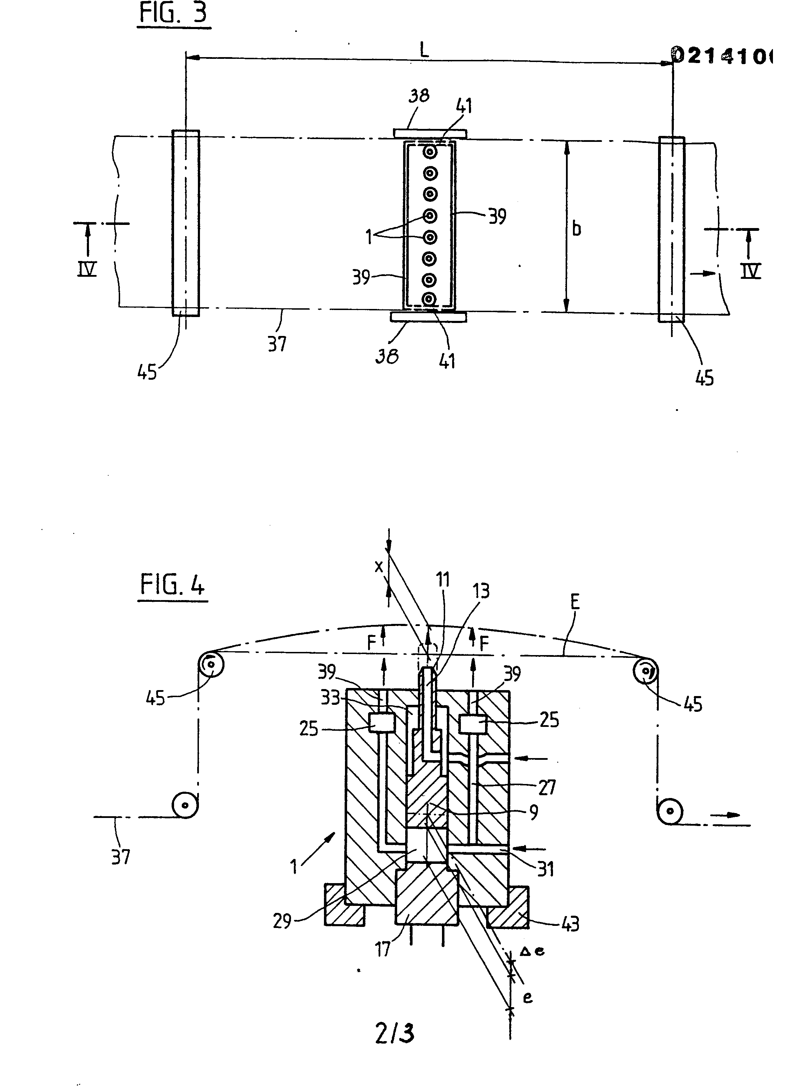

Figur 3     einen Grundriss einer Abstandsmesselementanordnung
            mit einer linearen Spaltdüse,

Figur 4     einen Querschnitt durch die Anordnung gemäss Figur
            3 entlang Linie IV-IV,

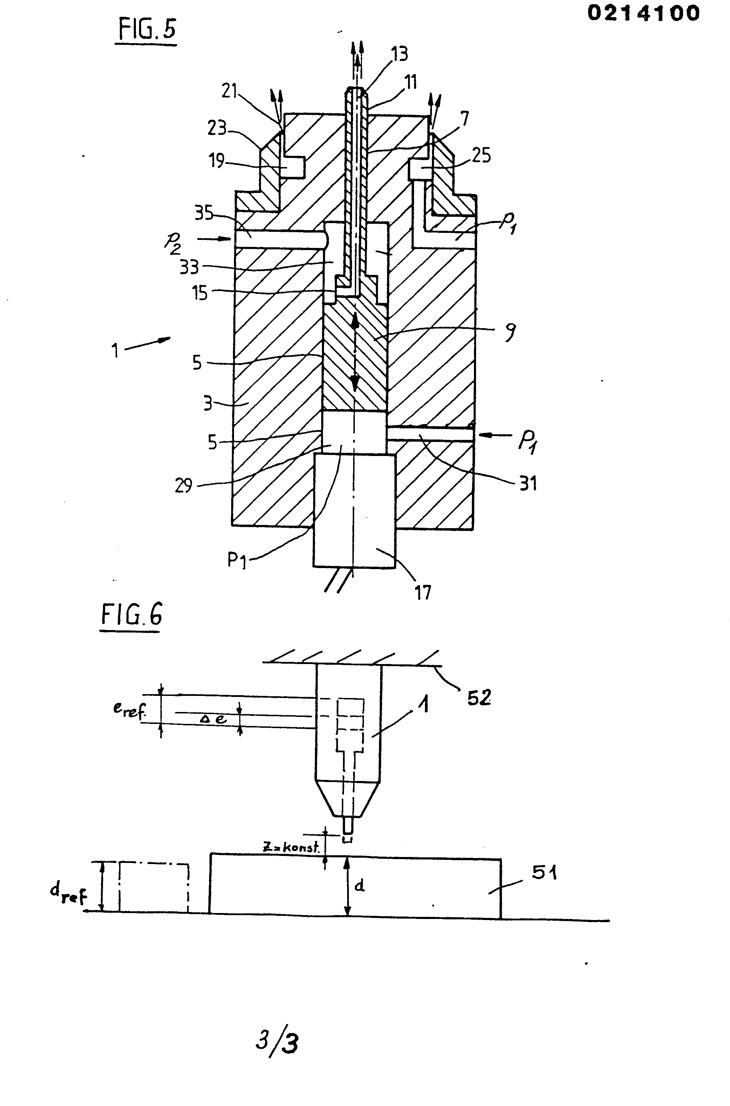

Figur 5     einen Querschnitt durch ein Wegmessgerät und

Figur 6     eine Ansicht einer Anlage zum Messen der Dicke
            eines starren Körpers.

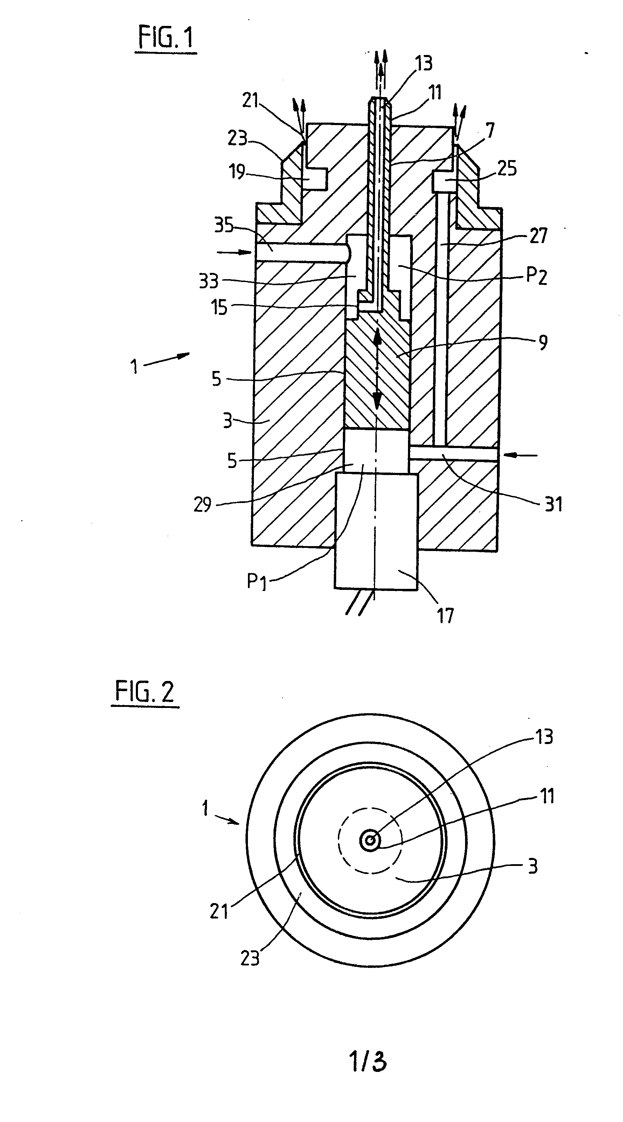

Ein Abstandsmesselement 1 gemäss den Figuren 1 und 2 weist
ein Gehäuse 3 mit zwei koaxialen Bohrungen 5 und 7 für einen
axial beweglichen Kolbenkörper 9 und einen daran befestigten,
koaxial angeordneten Düsenkörper 11 auf. Der Düsenkörper 11 am
Kolbenkörper 9 enthält eine Längsbohrung 13, die am unteren
Ende durch eine seitliche Oeffnung 15 mit der Bohrung 5 verbunden ist. Von unten ist die Bohrung 5 verschlossen. Als Verschluss kann ein Sensorelement 17 dienen, mit dem der Abstand e des Kolbenkörpers 9 zum Sensorelement 17 bzw. der Abstand einer Folienbahn 37 von einem Referenzpunkt, z.B. dem Sensorelement 17 gemessen werden kann. Am Umfang des oberen Endes des Gehäuses 3 ist eine Nut 19 angebracht, die unter Bildung einer Spaltdüse 21 von einem Flansch 23 abgedeckt ist. Der durch die Nut 19 und den Flansch 23 gebildete Raum 25 ist durch eine Leitung 27 mit dem Raum 29 unterhalb des Kolbenkörpers 9 verbunden, welcher durch eine Leitung 31 mit einer Druckluftquelle (Druck p1) in Verbindung steht.

In gewissen Anwendungsfällen und Einsatzbereichen ist es vorteilhaft, die Räume 25 und 29 einzeln an eine Druckluftquelle anzuschliessen und auf die interne Verbindungsleitung 27 zu verzichten (Figur 5).

Der ringförmige Raum 33 oberhalb des Kolbenkörpers 9 steht über eine Leitung 35 in Verbindung mit einer Druckluftquelle (Druck $p_2$).

In den Figuren 3 und 4 ist eine Anordnung von mehreren, quer zur Transportrichtung der Folienbahn 37 angeordneten Abstandsmesselementen 1 sichtbar. Die Abstandsmesselemente 1 können eine zur Bohrung 13 im Kolbenkörper 9 konzentrische Spaltdüse 21 gemäss den Figuren 1 und 2 aufweisen oder aber zwei lineare, je seitlich von den Düsenkörpern 11 verlaufende Spaltdüsen 39.

Die Spaltdüsen 39 können an den Enden geschlossen sein oder durch je eine parallel zum Rand des Folienbandes 37 verlaufende Spaltdüse 41 (in gebrochenen Linien dargestellt) untereinander verbunden sein, damit die dazwischenliegenden Düsen 11 analog zur Spaltdüse 21 in den Figuren 1 und 2 vollständig von den Spaltdüsen 39,41 umschlossen sind. Die Abstandsmesselemente 1 sind auf einem Träger 43, der in der Höhe verstellbar sein kann, angeordnet. Der Träger 43 kann auch Druckluftzufuhrleitungen enthalten, derart, dass beim Einsetzen der Abstandsmesselemente 1 in den Träger 43 eine Verbindung mit den Leitungen 31 und 35 hergestellt wird (keine Abbildung). Ausserhalb des Trägers 43 können in geringem Abstand von den Rändern der Folienbahn 37 auf die Breite b der Folienbahn 37 einstellbare Abdeckungen 38 angebracht sein.

Die Folienbahn 37 wird ausserhalb der Abstandsmesselemente 1 auf zwei in einem festen Abstand L angebrachten Rollen 45 abgestützt bzw. umgelenkt. Der Abstand zwischen den Luftaustrittdüsen 11 und einem planen, zwischen den Rollen 45 verlaufenden, gespannt gehaltenen Folienband 37 ist im Ruhezustand sehr gering (dünne strichpunktierte Linie in Figur 4). Dieser zwischen den beiden Rollen 45 liegende Messbereich kann sich an beliebiger Stelle innerhalb einer Produktionsanlage befinden. Die beiden Rollen 45 können bei Alufolien vorhandene Umlenk- oder Führungsrollen eines Walzwerkes sein.

Das Messen der Planheit einer an den Abstandsmesselementen 1 vorbeigeführten Metallfolie 37 erfolgt kontinuierlich nach dem nun beschriebenen Verfahren: Durch die Leitung 31 wird mit einem Gebläse Luft ($p_1$) in den Raum 29 unter dem Kolbenkörper 9 und in den Raum 25 unter den Spalt 21 bzw. 39 eingeblasen. Der durch die Spalten 21 bzw. 39 austretende Luftstrom lenkt die darüberliegende bzw. vorbeigeführte Folie 37 um einen Betrag $\underline{x}$ nach oben aus. Gleichzeitig wird auch der Kolbenkörper 9 durch die in den Raum 29 eingeblasene Luft ($p_1$) nach oben verschoben. Weil aber durch die Leitung 35 Luft mit einem Druck ($p_2$), wobei $p_2 > p_1$, in den Raum 33 gepresst wird, welche durch die Längsbohrung 13 oben aus der Düse 11 am Kolbenkörper 9 ausströmt, gelangt der Kolbenkörper 9 nicht in Kontakt mit der Folienbahn 37. Das sich an der Mündung der Bohrung 13 und der Folienbahn 37 bildende Luftkissen hält die Düse 11 stets in einem konstanten Abstand zur Folienbahn 37.

Die durch die Spalten 21 bzw. 39 austretende Luft lenkt folglich die Folienbahn 37 mit einer im wesentlichen konstanten, über die gesamte Breite $\underline{b}$ der Folie 37 verteilten Kraft F aus. Ist die Folienbahn 37 plan (Ebene E parallel zu den Achsen der Rollen 45), so ist der Abstand $\underline{x}$ der Auslenkung auf der gesamten Breite $\underline{b}$ gleich und folglich ist auch der Abstand $\underline{e}$ der Unterseite des Kolbenkörpers 9 von der Oberfläche des Sensorelementes 17 bei allen Abstandsmesselementen 1 gleich.

Ist hingegen die Folienbahn 37 in der Mitte länger, so hebt sie sich dort mehr als an den Rändern und der Kolbenkörper 9, dessen Mündung der Düse 11 stets den gleichen Abstand zur Folienbahn 37 beibehält, wird nach oben verschoben. Der Abstand $e$ zum Sensorelement 17 wird grösser und die gemessene Differenz x von der Sollage (plane Folienbahn 37) gibt direkt die Auslenkung an. x entspricht in diesem Fall $\Delta e$.

Zum Messen der Dicke $d$ eines Gegenstandes wird die Distanz von der Oberfläche des Gegenstandes vom Referenzpunkt im Abstandsmesselement 1, z.B. vom Sensorelement 17, können die Mittel zur Erzeugung einer Auslenkkraft (Spaltdüse 21) weggelassen werden; oder es wird keine Luft aus den Spaltdüsen bzw. der Spaltdüse 21 ausgeblasen.

In der Figur 6 ist eine Anordnung zum Messen der Dicke von Barren 51 in einem Walzwerk dargestellt. Selbstverständlich kann diese Anordnung auch für beliebige andere Zwecke verwendet werden.

Das für die Messung notwendige Abstandsmesselement 1 ist an einem fest angeordneten Träger 52 befestigt. Der zu messende Barren 51 wird unter dem Element 1 hindurchgeführt und dabei die jeweilige Aenderung $\Delta e$ des Kolbenkörpers 9 vom Sensorelement 17 gemessen und in einem Rechner (nicht gezeigt) direkt ermittelt. Vorgängig zu jeder Messung muss selbstverständlich mittels eines Referenz- oder Eichbarrens die Vorrichtung, bzw. der Rechner, auf den entsprechenden Referenzwert eingestellt werden.

Die Dicke $d$ des Barrens 51 wird dann wie folgt bestimmt:

$d = d_{ref} + \Delta e$, wobei $d_{ref}$ die Dicke des Referenzbarrens ist.

0214100

Generell gilt bei jeder Messung, dass die Messung umso genauer ist, je stabiler der Zustand der Kolbenkörper 9 im Abstandsmessgerät 1 zur Zeit der Messung ist. Mit anderen Worten: der Abstand des Kolbenkörpers 9 zum zu messenden Gegenstand soll im Moment der Messung im wesentlichen konstant sein. Dies trifft sowohl bei Folien als auch bei Barren zu, da die Planheit bzw. die Dicke in äusserst geringen Grenzen variieren kann.

Die Abstandsmesselemente 1 könnten bei entsprechender Anpassung auch mit Unterdruck arbeiten.

- 10 -

0214100

Patentansprüche
***************

1. Verfahren zum Messen eines Abstandes zwischen einem Abstandsmesselement und einem vor diesem befindlichen Gegenstand mit einem gegen den Gegenstand gerichteten Luftstrahl, dadurch gekennzeichnet, dass der Luftstrahl in einem axial beweglich gelagerten Düsenkörper (11) erzeugt wird, durch den Luft mit im wesentlichen konstantem Druck (p2) strömt, dass der Düsenkörper (11) gleichzeitig mit einer konstanten Kraft dem Gegenstand (51) bzw. dessen Oberfläche nachgeführt wird, wobei die Rückstosskraft des Luftstrahles am Gegenstand (51) aufgehoben wird, derart, dass der Düsenkörper (11) stets in einem konstanten Abstand (z) zum Gegenstand (51) zu liegen kommt, und dass der Verschiebweg ($\Delta$e) des Düsenkörpers (11) im Messelement (1) gemessen und zur Berechnung des Abstandes des Gegenstandes (51) von einer Referenzmarke bzw. einem Nullwert benutzt wird.

2. Verfahren nach Anspruch 1, dadurch gekennzeichnet, dass die Kraft pneumatisch durch ein Luftpolster von im wesentlichen konstantem Druck ($p_1$) auf der Rückseite des Düsenkörpers (11) erzeugt wird.

3. Verfahren nach Anspruch 1, dadurch gekennzeichnet, dass die durch den Düsenkörper (11) strömende Luft aus einem Raum (33), der den Düsenkörper (11) im oberen Teil umgibt, in diesen eingespeist wird.


4. Abstandsmesselement zum Messen des Abstandes zwischen einer Referenzmarke und einem im Abstand dazu befindlichen Gegenstand, dadurch gekennzeichnet,

dass in einem Gehäuse (3) ein in einer einseitig offenen Bohrung (5) axial verschiebbarer Kolbenkörper (9) mit einem rohrförmigen, in einer zur Bohrung (5) koaxialen Bohrung (7) gleitenden Düsenkörper (11) eingesetzt ist, wobei der Durchmesser der Bohrung (5) grösser ist als der Durchmesser der Bohrung (7), dass unter dem Kolbenkörper (9) in der Bohrung (5) ein Raum (29) mit Druck ($p_1$) beaufschlagbar und der Raum (33) in der Bohrung (5) über dem Kolbenkörper (9) in Verbindung mit der Bohrung (13) im Düsenkörper (11) steht und mit einem Druck ($p_2$) beaufschlagbar ist, und dass unter dem Kolbenkörper (9) ein Sensorelement (17) zum Messen des Verschiebeweges ($\Delta e$) des Kolbenkörpers (9) in der Bohrung (5) eingesetzt ist.


5. Verfahren zum kontinuierlichen Messen der Planheit einer Folienbahn in einer Produktionsanlage, dadurch gekennzeichnet, dass die Folienbahn (37)

a) an zwei in einem festen Abstand (L) angeordneten Rollen (45) abgestützt oder umgelenkt wird,

b) die Folienbahn (37) mit strömender Luft ausgelenkt wird und

c) die Auslenkung (x) an mehreren Stellen entlang der Breite (b) der Folienbahn (37) im Zentrum des durch die strömende Luft erzeugten Luftpolsters gemessen wird.

6. Verfahren nach Anspruch 5, dadurch gekennzeichnet, dass die Luft (Druck $p_1$) aus einer Mehrzahl von kreisringförmig ausgebildeten Spaltdüsen (21) gegen die Folienbahn (37) geleitet wird und die Auslenkung (x) im Zentrum der Spaltdüsen (21) gemessen wird.

7. Verfahren nach Anspruch 5, dadurch gekennzeichnet, dass die Luft (Druck $p_1$) aus zwei in geringem Abstand angeordneten, quer zur Folienbahn (37) verlaufenden Spaltdüsen (39) gegen die Folienbahn (37) geleitet wird und die Auslenkung ($\Delta e$) zwischen den Spaltdüsen (39) an mehreren Stellen gemessen wird.

8. Verfahren nach einem der Ansprüche 5 oder 6, dadurch gekennzeichnet, dass zum Messen der Auslenkung (x) ein Abstandsmesselement (1) gemäss Anspruch 4 eingesetzt ist.

9. Verfahren nach Anspruch 4, dadurch gekennzeichnet, dass der Druck ($p_2$) grösser ist als der Druck ($p_1$).

0214100

10. Element zum Messen der Planheit einer Folienbahn, dadurch gekennzeichnet, dass in einem Gehäuse (3) ein in einer einseitig offenen Bohrung (5) axial verschiebbarer Kolbenkörper (9) mit einem rohrförmigen, in einer zur Bohrung (5) koaxialen Bohrung (7) gleitenden Düsenkörper (11) eingesetzt ist, dass unter dem Kolbenkörper (9) in der Bohrung (5) ein Raum 29 mit Druck ($p_1$) beaufschlagbar und der Raum (33) in der Bohrung (5) über dem Kolbenkörper (9) in Verbindung mit der Bohrung (13) in der Düse (11) steht und mit einem Druck ($p_2$) beaufschlagbar ist, dass neben dem Düsenkörper (11) eine Spaltdüse (21,39) angeordnet ist, die mit einem Raum (19) verbunden und mit einem Druck ($p_1$) beaufschlagbar ist, und dass unter dem Kolbenkörper (9) ein Sensorelement (17) zum Messen des Verschiebeweges ($\Delta e$) des Kolbenkörpers (9) eingesetzt ist.

11. Element nach Anspruch 10, dadurch gekennzeichnet, dass der Raum (19) und der Raum (29) miteinander über eine Leitung (27) verbunden sind.

12. Element nach Anspruch 10 oder 11, dadurch gekennzeichnet, dass die Spaltdüse (21) kreisringförmig ausgebildet und konzentrisch zur Düse (11) angeordnet ist.

13. Element nach einem der Ansprüche 11 oder 12, dadurch gekennzeichnet, dass die Spaltdüsen (39) linear ausgebildet und in einem festen Abstand seitlich der Düse (11) angebracht sind und das Abstandsmesselement (1) aus mehreren auf einer Geraden in Serie angeordneten Düsen (11) besteht.

14. Element nach Anspruch 13, dadurch gekennzeichnet, dass die beiden Spaltdüsen (39) an den Enden durch einen Spalt (41) untereinander verbunden sind.

FIG.1

0214100

FIG.2

1/3

FIG. 3

FIG. 4

FIG.5

0214100

FIG.6

3/3

# EUROPÄISCHER RECHERCHENBERICHT

**0214100**
Nummer der Anmeldung

| | EINSCHLÄGIGE DOKUMENTE | | EP 86810385.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AT - B - 367 906 (ZUMBACH) <br> * Gesamt * <br><br> -- | 1-4 | G 01 B 13/12 |
| X | GB - A - 2 042 179 (BERGLUND) <br> * Gesamt * <br><br> -- | 1-4 | |
| X | US - A - 4 031 741 (SCHAMING) <br> * Gesamt * <br><br> -- | 5 | |
| A | GB - A - 1 029 826 (PILKINGTON) <br> * Gesamt * <br><br> ---- | | |

| RECHERCHIERTE SACHGEBIETE (Int. Cl.4) |
|---|
| G 01 B 13/00 <br> G 01 B 21/00 |

Der vorliegende Recherchenbericht wurde für alle Patentansprüche erstellt

| Recherchenort | Abschlußdatum der Recherche | Prüfer |
|---|---|---|
| WIEN | 10-11-1986 | TOMASELLI |